(19) Europäisches Patentamt
European Patent Office
Office européen des brevets

(11) EP 4 648 273 A1

(12) **EUROPEAN PATENT APPLICATION**

(43) Date of publication:
**12.11.2025 Bulletin 2025/46**

(21) Application number: **24174813.6**

(22) Date of filing: **08.05.2024**

(51) International Patent Classification (IPC):
***H02P 29/50*** *(2016.01)* ***H02P 25/22*** *(2006.01)*

(52) Cooperative Patent Classification (CPC):
**H02P 29/50; H02P 25/22;** H02P 2101/15

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Gamesa Renewable Energy A/S**
**7330 Brande (DK)**

(72) Inventor: **The designation of the inventor has not yet been filed**

(74) Representative: **SGRE-Association**
**Siemens Energy Global GmbH & Co. KG**
**SE I IM P Intellectual Property**
**Siemenspromenade 9**
**91058 Erlangen (DE)**

(54) **CONTROL OF A MULTI WINDING SET GENERATOR**

(57) It is described a method of controlling a generator (116) having a multi-stator-segment stator (101) comprising a first stator-segment (102a, S1) having a first multi phase winding set (104) and at least one second stator-segment (103a, S1) having least one second multi phase winding set (105), the method comprising: receiving first input signals (118_1) indicating an operation point of the first winding set (104); receiving second input signals (118_2) indicating an operation point of the second winding set (105); determining a first harmonic reference current (120_1) of at least one harmonic based on the first input signals; determining a second harmonic reference current (120_2) of at least one harmonic based on the second input signals; controlling the first winding set (104) based on the first harmonic reference current (120_1); controlling the second winding set (105) based on the second harmonic reference current (120_2).

FIG 1
100
105
104
103a
102a
103b
102b
117
118_2
115
120_1
118_1
120_2
119
101
103c
102c
104
106
107
109
102f
103f
105
108
102e
102d
103d
103e
116
S1
S2

EP 4 648 273 A1

## Description

### Field of invention

The present invention relates to a method and to a corresponding arrangement of controlling a generator having a multi-stator-segment stator having plural winding sets, in particular for damping torque ripples. Furthermore, the present invention relates to a generator system comprising the arrangement. Further, the present invention relates to a wind turbine comprising the generator system.

### Art Background

When operating a generator, torque ripples have been observed which may correspond to harmonics of a fundamental frequency at which the generator is operated. Conventionally, torque ripple control (TRC) has been performed via current harmonic injection.

Conventional methods and procedures applied to multi winding set electrical machines or generators may not have in all situations or circumstances provided sufficient or satisfactory results regarding torque ripple reduction.

Thus, there may be a need for a method and a corresponding arrangement of controlling a multi stator-segment generator having plural winding sets, wherein torque ripples are effectively reduced and wherein in particular manufacturing inaccuracies of different generator components, in particular stator and/or rotor, are considered.

### Summary of the Invention

According to an embodiment of the present invention, it is provided a method of controlling a (e.g. permanent magnet synchronous) generator, in particular of a wind turbine, having a multi-stator-segment stator comprising a first stator-segment having a first multi phase winding set and at least one second stator-segment having least one second multi phase winding set, the method comprising: receiving, in particular at a first harmonic current reference calculation module, first input signals indicating an operation point of the first winding set; receiving, in particular at a second harmonic current reference calculation module, second input signals indicating an operation point of the second winding set; determining, in particular in a dq-frame, a first harmonic reference current of at least one harmonic based on the first input signals, in particular for reducing torque ripple of the first winding set; determining, in particular in a dq-frame, a second harmonic reference current of at least one harmonic based on the second input signals, in particular for reducing torque ripple of the second winding set, wherein the first and second harmonic reference currents are in particular determined for reducing torque ripple of the complete generator; controlling the first winding set based on the first harmonic reference current; controlling the second winding set based on the second harmonic reference current.

The generator has multiple or plural electrical systems or winding sets. Each winding set is a multi phase winding set, for example providing three phases or a higher number of phases. Each stator-segment may provide a circumferential section of a whole circumference, for example spanning an angle range of 20°, 30°, 45° or 90° for example. Each stator-segment may have a multi phase winding set arranged therein or wound at the stator-segment. Thereby each stator-segment may comprise plural teeth having slots in-between, wherein the winding set is arranged within in the slots between the teeth.

The winding sets may be arranged at the respective stator-segments according to a distributed winding topology or according to a concentrated winding topology depending on the application.

One or more winding sets (each one belonging to one stator segment) may be connected in parallel thereby defining a winding set group. The parallelly connected winding sets may then be connected electrically to a converter, for example comprising an AC/DC section, a DC link and a DC/AC section.

The generator may be a synchronous generator. The generator may further comprise a rotor having in particular permanent magnets mounted. The rotor may in particular be an outer rotor, i.e. rotating radially outwards from the stator being composed of plural stator segments. The generator may comprise for example between 2 and 24 stator-segments.

To each winding set an individual operating point or operation conditions may be associated. The operating point may for example be defined by one or more electrical parameter values relating to the considered winding set. For example, currents and/or voltages carried or associated with the particular winding set may be utilized for defining the operation point.

The method may be performed during a (e.g. normal) operation condition of the generator where for example the generator produces electric energy which is then supplied to a utility grid. The control may for example be performed in real-time, for example in order to improve performance and/or reduce noise emission.

The generator may be operated at a fundamental frequency, for example relating to a fundamental electrical speed or frequency being related (e.g. proportional) to the mechanical rotational speed by considering for example a number of pole pairs for example. The respective harmonic current references may be designed in order to dampen or to reduce a ripple (for example torque, current, voltage, power) which has a frequency as a multiple of the fundamental frequency, thus being a harmonic distortion. The harmonics addressed by the method according to embodiments of the present invention, may comprise for example a second, a fourth, a sixth harmonic and/or still a higher number of a multiple of a fundamental frequency like 12 or the twelfths harmonic referred to a synchronous reference frame (dq-frame). Thereby, the harmonics are referred to as for example nf, wherein n may stand for the order of the harmonics, f being the fundamental frequency. Thus, the method may for example be configured or adapted to dampen a 6f harmonic and/or a 12f harmonic corresponding to 6 times a fundamental or 12 times a fundamental frequency.

The method may be implemented in software and/or hardware and/or may be performed for example at least in part by a generator controller, in particular a wind turbine controller or control module. The first input signals and/or the second input signals may relate to measured and/or estimated and/or calculated input signals. Thereby, high flexibility is provided for selecting signals or parameter values which indicate an operating point of the respective winding set.

The first as well as the second harmonic reference current may be determined in particular in order to dampen a torque ripple having the respective harmonic frequency. The first/second harmonic reference current may be dependent on the respective operating point of the winding set. For example, the first/second harmonic reference current may be different for respective two different (or same) operating points of the respective considered winding set. Controlling the respective winding sets may involve to for example determine respective reference voltages based on the reference currents and may then involve to control a respective converter which is electrically connected to the respective winding set.

When different harmonic current references for different winding sets are determined and supplied for controlling the generator, inaccuracy of manufacturing the respective stator-segments may be addressed and accounted for and the damping/cancelling of the respective torque ripples may be improved. The respective first and second harmonic current references may be different, for example different in amplitude and/or in phase. The advantages may include to provide an optimal ripple (harmonic) reduction.

According to an embodiment of the present invention, the first stator-segment is different in geometry from the second stator-segment due to manufacturing deviations, and/or the difference is due to tolerance on rotor and/or magnet and/or airgap, and/or wherein the first harmonic reference current and the second harmonic reference current are different, in particular in amplitude and/or in phase.

Due to manufacturing imperfections of manufacturing the respective stator-segments, tolerances and non-uniform component shapes or deformations are observed including air gap dimensions and/or rotor and/or magnet and/or magnet flux and winding temperatures to be different for the different stator-segments. These manufacturing differences or imperfections may lead to different torque ripple characteristics in each system. Embodiments of the present invention address these problems in that different harmonic current references are injected in the different stator-segments and/or winding sets taking into account the manufacturing differences.

Thus, it may be effective and advantageous to have a separate and different torque ripple control for each winding set. In particular, it may be advantageous to inject different optimal current harmonic amplitude and/or phases, to ensure optimal total ripple reduction.

The generator may include a large electrical machine, wherein to ease manufacturing and increase reliability, the stator is circumferentially segmented and electrically connected to different systems. For example the generator may have two systems (or more systems) and the stator may be grouped into for example four quadrants of three-segment each. Due to manufacturing tolerances, the two systems are not identical in shape and geometry. By determining and supplying different harmonic current references to the different winding sets, ripple control or reduction may be improved.

According to an embodiment of the present invention, the first input signals and the second input signals are different or substantially equal.

The operating point of the different winding sets may be essentially the same or similar or may be different. Thereby, high flexibility is provided because it is not required to operate both or all winding sets or all groups of winding sets according to a same operating procedure or operating point. For example one of the winding sets or groups of winding sets may be operated in a curtailed manner, for example due to high temperatures at the winding set or other reasons. Even if the first input signals and second input signals indicate substantially the same operating points of both winding sets, the respective harmonic current references may be different since the different stator-segments (at which the respective winding sets are arranged) are different in geometry or shape due to manufacturing differences.

According to an embodiment of the present invention, open-loop torque reduction is performed separately for the first winding set and the second winding set.

The control of the first and second winding sets may be independently from each other. The open-loop reduction may refer to the lack of necessity to provide torque feedback, for example a measured torque from which an error with respect to a reference torque is calculated and supplied for example to a PI controller. Thus, embodiments of the present invention do not require measured torque feedback for performing or running the method. Thereby, the method may be simplified.

According to an embodiment of the present invention, the first winding set is connected to a first converter, wherein the second winding set is connected to a second converter, wherein the first winding set is controlled by controlling the first converter, wherein the second winding set is controlled by controlling the second converter.

When plural winding sets are arranged at the plural stator-segments, some of the winding sets may be connected in parallel thereby forming a respective winding set group which may be connected to a converter. According to an embodiment of the present invention, each such winding set group is connected to a respective converter. Thus, for example at the first converter plural winding sets may be connected and also at the second converter plural winding sets may be connected. The converter may comprise an AC/DC converter portion, a DC link and a DC/AC converter portion for converting a variable frequency power stream to a substantially fixed frequency (for example 50Hz or 60Hz) power stream. The converter may comprise plural controllable switches, such as power transistors, which are controlled by supplying respective gate signals, for example in the form of pulse width modulation signals. Thereby, conventionally available equipment may be supported or utilized for implementing embodiments of the present invention.

According to an embodiment of the present invention, the method further comprises determining, in particular in a dq-frame, in particular by a first fundamental current reference calculation module, a first fundamental reference current based on the first input signals; and/or determining, in particular in a dq-frame, in particular by a second fundamental current reference calculation module, a second fundamental reference current based on the second input signals; controlling the first winding set further based on the first fundamental reference current; and/or controlling the second winding set further based on the second fundamental reference current.

The respective fundamental reference currents may define the desired or demanded operation of the generator in terms of production of torque and/or power and/or reactive power and/or active power and/or current and/or reactive current and/or voltage.

According to embodiments of the present invention, the respective fundamental reference current may be summed with the respective harmonic reference current and the respective winding set may be controlled based on the sum signal. Thereby, the generator may produce electric power, current, voltage as demanded, while torque ripples are effectively reduced.

According to an embodiment of the present invention, controlling the first winding set based on the first harmonic reference current and/or the first fundamental reference current includes closed loop control using a first actual current carried in the first winding set, in particular using a first (e.g. PI) current controller receiving the first harmonic reference current and/or the first fundamental reference current and the first actual current; wherein controlling the second winding set based on the second harmonic reference current and/or the second fundamental reference current includes closed loop control using a second actual current carried in the second winding set, in particular using a second (e.g. PI) current controller receiving the second harmonic reference current and/or the second fundamental reference current and the second actual current.

The control method may involve a closed loop current control. Thus, a current may be fed back to control components or modules and they are or may be compared to respective reference currents, in order to derive respective reference voltages, which are determined in order to decrease the error between the reference current and the actual current. The control may essentially be performed in the dq rotating frame which rotates for example with the fundamental frequency. Values in a static reference frame, for example abc frame, may be transformed or converted into values in the dq frame by known transformations involving for example a Park transformation. Thereby, conventionally available control equipment may be utilized for implementing embodiments of the present invention.

According to an embodiment of the present invention, the first current controller outputs a first reference voltage, in particular in a dq-frame, wherein based on the first reference voltage a first converter in controlled, in particular by first pulse width modulation signals, the first converter being electrically connected to the first winding set, and/or wherein the second current controller outputs a second reference voltage, in particular in a dq-frame, wherein based on the second reference voltage a second converter in controlled, in particular by second pulse width modulation signals, the second converter being electrically connected to the second winding set.

For example, reference voltages for the respective winding sets may be converted from the dq frame to an abc frame and the reference voltage in the abc frame may be supplied to a modulator which thereupon calculates gate driver signals which are supplied for controlling the respective converter.

According to an embodiment of the present invention, the operation point of the respective winding set is indicated by at least one of: a d-component and a q-component of an actual current of the respective winding set; an estimated torque and electrical speed of the respective winding set; an active power and a reactive power of the respective winding set.

In combination with one or more of the above parameters, the operations point may be indicated with a (e.g. average) generator temperature, in particular (e.g. average) stator and/or (e.g. average) rotor temperature.

The operating point may be defined according to different embodiments in different manners. The manner in which the operation point is defined may be selected based on the application and the available parameter values for example. Thereby, high flexibility is provided.

According to an embodiment of the present invention, determining the first harmonic reference current includes looking up at least one first look-up-table, in particular for amplitude and phase, based on the first input signals, and/or wherein determining the second harmonic reference current includes looking up at least one second look-up-table, in particular for amplitude and phase, based on the second input signals.

The harmonic (d- and q-component) reference currents i*dqh for harmonic h may be calculated from respective phase and amplitude (e.g. retrieved from the LUT) as follows:

```
i*dqh = LUT_amp_dqh * sin (h*GenTheta + LUT_phase_dqh),
```

where GenTheta stands for generator rotor electrical position,
LUT_amp_dqh is the amplitude for harmonic h,
LUT_phase_dqh is the phase for harmonic h.

The at least one first look-up-table may in fact comprise two first look-up-tables one providing an amplitude and the other providing for example a phase of the reference current. The respective entry may be accessed by providing the definition of the operating point. The respective look-up-table may have previously been determined. The respective look-up-tables may be stored in an electronic storage and accessed during performing the method. In other embodiments, for example a mathematical equation (e.g. implementing an analytical solution) may be provided, which outputs the respective harmonic reference current when the operation point is given.

Thereby, e.g. field measurements may be considered. E.g. the optimal combination (of harmonic reference currents) may be found for each working point.

Thus, current references may be derived from simulations and/or field tests.

According to an embodiment of the present invention, the first and/or second look-up-table is determined by simulations taking into account geometries of the first stator-segment and second stator-segment and/or test runs on the generator involving measuring harmonic torque, and/or vibrations, and/or noise for different candidate values of reference currents in the look-up-tables.

The simulations may include modelling of the physical system in software, thereby taking into account the actual shape and configuration and construction of the respective generator components. Further during potential test runs, the generator may be operated at different operation points for each winding set and respective test candidate harmonic current references may be injected and the response may be monitored for example by measuring the harmonic torque for example by a microphone and/or an accelerator or similar sensor. The optimal harmonic reference currents may then for example be determined by a trial-and-error method or descending gradient method. The respective harmonic current reference may for example be determined in an iterative manner. Thereby, the harmonic current references may be determined in a simple and reliable manner.

According to an embodiment of the present invention, the 6F and/or 12F harmonic is damped by the controlling; and/or wherein the generator has 6, 12 or 16 stator-segments, each stator-segment being associated with and having wound thereon one winding set, wherein in particular exactly two winding set groups are provided, each group being connected in parallel and connected to a respective converter.

Other harmonics may be reduced and the generator may have a different configuration having less or more stator-segments.

It should be understood that features, individually or in any combinations, disclosed, applied, provided or explained with respect to a method of controlling a multi winding set generator may also, individually or in any combination, applied or provided for an arrangement for controlling a multi winding set generator according to embodiments of the present invention and vice-versa.

According to an embodiment of the present invention, it is provided an arrangement for controlling a (e.g. permanent magnet synchronous) generator, in particular of a wind turbine, having a multi-segment stator comprising a first stator-segment having a first multi phase winding set and at least one second stator-segment having least one second multi phase winding set, the arrangement comprising: a processor having an input port adapted: to receive, in particular at a first harmonic current reference calculation module, first input signals indicating an operation point of the first winding set; to receive, in particular at a second harmonic current reference calculation module, second input signals indicating an operation point of the second winding set; the processor being adapted: to determine, in particular in a dq-frame, a first harmonic reference current of at least one harmonic based on the first input signals, in particular for reducing harmonic torque ripple of the first winding set; to determine, in particular in a dq-frame, a second harmonic reference current of at least one harmonic based on the second input signals, in particular for reducing harmonic torque ripple of the second winding set; the processor having an output port adapted and being connected: to control the first winding set based on the first harmonic reference current; to control the second winding set based on the second harmonic reference current.

The arrangement may be configured to perform or control a method of the previously described embodiments. The arrangement may be implemented in software and/or hardware and/or may be a part of a generator system controller for example.

According to an embodiment of the present invention, it is provided a multi stator-segment stator comprising a first stator-segment having a first multi phase winding set and at least one second stator-segment having least one second multi phase winding set; an arrangement according to the preceding embodiment; in particular a permanent magnet rotor.

According to an embodiment of the present invention, it is provided a wind turbine, including: a generator system according to the preceding embodiment; a hub having plural rotor blades mounted, the hub being coupled with the rotor of the generator system.

Brief Description of the Drawings

Embodiments of the present invention are now described with reference to the accompanying drawings. The invention is not restricted to the illustrated or described embodiments.

Fig. 1 schematically illustrates a generator system according to an embodiment of the present invention;

Fig. 2 illustrates torque ripples as observed in the system illustrated in Fig. 1;

Fig. 3 schematically illustrates a wind turbine according to an embodiment of the present invention; and

Fig. 4 illustrates harmonic reference currents as determined according to embodiments of the present invention.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

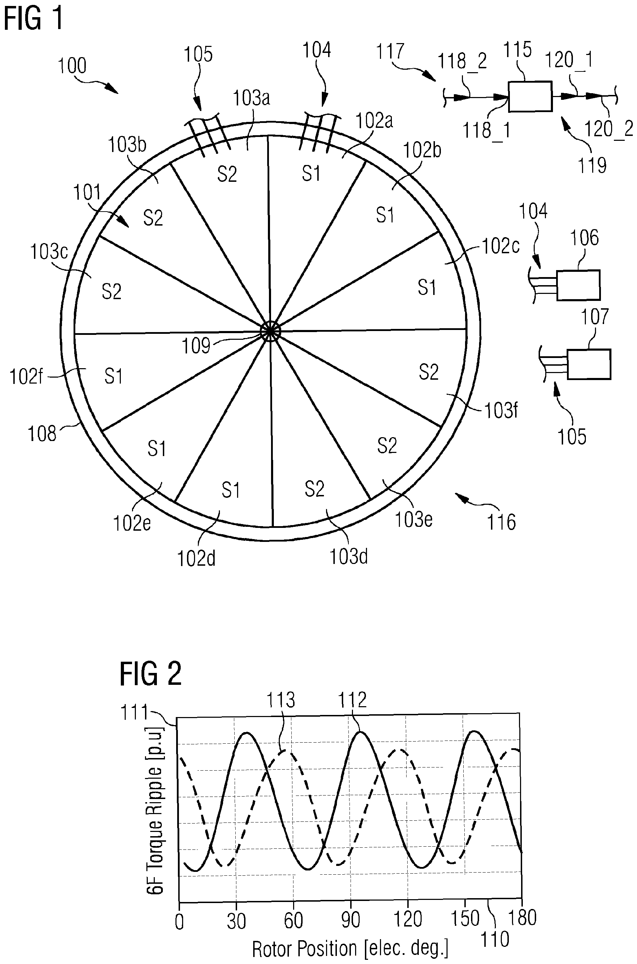

The generator system 100 schematically illustrated in Fig. 1 comprises a multi-stator-segment stator 101 comprising a first stator-segment 102a and at least one second stator-segment 103a both having a multi phase winding sets arranged thereon or wound thereon. In particular, the first stator-segment 102a has wound thereon a first multi phase winding set 104 and the second stator-segment 103a as wound thereon or arranged thereon a second multi phase winding set 105.

In the illustrated embodiment, the stator 101 comprises in total 12 stator-segments. Thereby, the respective winding sets 104 of a first group of first stator-segments 102a, 102b, 102c, 102d, 102e and 102f are connected in parallel (not in detail illustrated) and are connected to a first converter 106. Furthermore, the winding set 105, which are arranged at the 6 stator-segments 103a, ...f also connected in parallel connected to a second converter 107.

The generator system 100 illustrated in Fig. 1 is a quadrant system layout, wherein 12 segments 102a, ...102f, 103a, ...103f, are grouped in four quadrants and connected to two converters 106, 107, as illustrated.

The generator system 100 further comprises an outer rotor 108 having not in detail illustrated mounted permanent magnets. The rotor 108 is an outer rotor, i.e. rotating radially outwards relative to the stator 101. The rotation axis is indicated with reference 109 and runs perpendicular to the drawing page of Fig. 1.

Stator 101 and rotor 108 together form a generator 116.

In Fig. 1 the stator-segments 102a ,... 102f form a group belonging to the system S1 while the stator-segments 103a ,...103f form a group belonging to the second system S2.

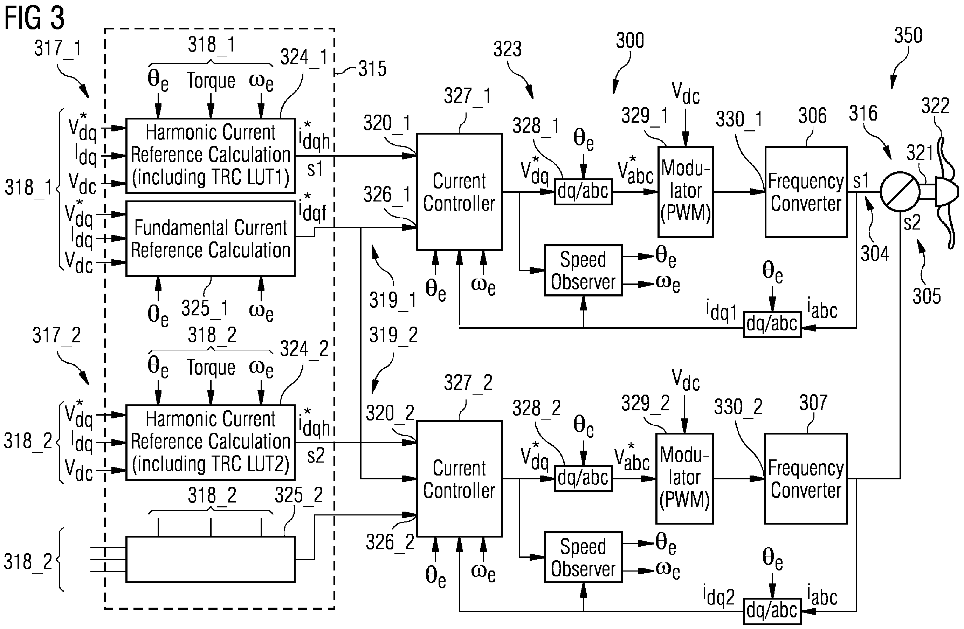

The generator system 100 illustrated in Fig. 1 further comprises an arrangement 115 for controlling the generator 116 comprising the stator 101 and the rotor 108. The arrangement 115 comprises an input port 117, which is adapted to receive first input signals 118_1 and second input signals 118_2 respectively indicating an operation point of the first system S1 and the second system S2, respectively. Further, a processor is adapted to determine respective harmonic current references 120_1, 120_2 based on the respective input signals. Furthermore, the arrangement 115 comprises an output port 119 to output a respective first harmonic reference current 120_1 and a second harmonic reference current 120_2 in order to control the first winding set 104 (S1) and the second winding set 105 (S2). The arrangement 115 will further in detail be described with reference to Fig. 3.

**Fig. 2** illustrates curves in a coordinate system having an abscissa 110 indicating the rotor position and having an ordinate 111 indicating the torque amplitude. The curves 112, 113 indicate torque ripples as occurring in the system 1 (S1) and system 2 (S2) of winding sets of the generator system illustrated in Fig. 1, while no torque ripple control is applied.

It can be appreciated that the two systems S1, S2 exhibit different harmonic torque due to imperfection, tolerances, and non-uniform deformations of the respective stator-segments illustrated in Fig. 1.

Embodiments of the present invention provide a control method and respective arrangement for counteracting the torque ripples as observed for the systems and illustrated in Fig. 2.

**Fig. 3** schematically illustrates a wind turbine 350 according to an embodiment of the present invention.

The wind turbine 350 illustrated in Fig. 3 in a schematic manner comprises a generator system 300 according to an embodiment of the present invention as well as a hub 321 at which plural rotor blades 322 are mounted. The hub 321 is mechanically coupled to a rotor of the generator 316. The generator 316 comprises at least two stator-segments having respective multi phase winding sets wound thereon, wherein the system S1 comprises the winding set 304 while the system S2 comprises the winding set 305.

The generator system 300 comprises the multi-stator-segment generator 316 as well as at least the arrangement 315 for controlling the generator 316. The generator system 300 further comprises control equipment 323 which will be explained in detail below and which also may belong to the arrangement 315 according to particular embodiments.

The arrangement 315 comprises an input port 317_1, 317_2 adapted to receive first input signals 318_1 relating to the first system S1 and to receive second input signals 318_2 relating to the second system S2. Furthermore, the arrangement comprises a processor, which is adapted to determine a first harmonic current reference 320_1 based on the respective first input signals 318_1 and the processor is further configured to determine a second harmonic current reference 320_2 based on the second input signal 318_2.

The respective harmonic current references 320_1, 320_2 are output via an output port 319_1, 319_2 of the arrangement 315.

In the illustrated embodiment, the arrangement 315 comprises a first harmonic current reference calculation module 324_1 and a second harmonic current reference calculation module 324_2 for determining the respective harmonic current references 320_1, 320_2. Thereby, the respective input signals 318_1, 318_2 may comprise for example a reference voltage and/or an actual current and/or a DC voltage and/or an electric position and/or a torque and/or a rotational speed relating to the respective first or second systems S1, S2. Those input signals 318_1, 318_2 define respective operation points of the first system S1 and the second system S2.

In the illustrated embodiment, each the first harmonic current reference calculation module 324_1 and the second harmonic current reference calculation module 324_2 calculates or determines both the d-component and the q-component of the respective reference current.

In other embodiments the d-component and the q-component of the reference currents could be calculated/determined separately by individual determination blocks/procedures.

In other embodiments it may be chosen to use the (open-loop) method described here for generating Iqh* (i.e. the q-component of the harmonic reference current for the first and/or second system) only, whereas Idh* (i.e. the d-component of the harmonic reference current for the first and/or second system) may be generated differently (e.g. in a closed-loop manner with a target different for torque ripple reduction).

In the illustrated embodiment the harmonic current references 320_1, 320_2 are determined in the dq frame and denoted i*_dqh. Thereby the letter h stands for the harmonic, which may for example be the sixth harmonic or the twelfth harmonic or another harmonic of a fundamental frequency.

As can be appreciated from Fig. 3, the control arrangement 315 is an open loop torque reduction scheme, thus not requiring any torque feedback. Furthermore, it can be appreciated that the torque reduction is separately performed in the two systems S1, S2. Furthermore, the first winding set 304 (belonging to system S1) is connected to a first converter 306 and the second winding set 305 (belonging to system S2) is connected to a second converter 307.

In the illustrated embodiment, the arrangement 315 comprises further a first fundamental current reference calculation module 325_1 and a second fundamental current reference calculation module 324_2 which respectively determine based on the respective input signals 318_1, 318_2, a first fundamental reference current 326_1 and a second fundamental reference current 326_2, which are also denoted as i*_dqf (f indicating "fundamental").

Controlling the respective first winding set 304 (S1) and the second winding set 305 (S2) is further based on the respective first and second fundamental reference current 326_1, 326_2. In particular, in the illustrated embodiment, the arrangement 315 or at least the generator 300 system comprises a first current controller 327_1 which receives both, the first harmonic current reference 320_1 as well as the first fundamental current reference 326_1 and determines a first reference voltage 328_1. Similarly, the second current controller 327_2 receives the second harmonic current reference 320_2 as well as the second fundamental current reference 326_2 in order to derive a second reference voltage 328_2.

Based on the first reference voltage 328_1, after conversion of the dq components in an abc component, a first modulator 329_1 is controlled in order to output first pulse width modulation signals 330_1 which are supplied to the first converter 306. Similarly, also the second reference voltage 328_2 is input into a conversion module and the converted voltage is supplied to a second modulator 329_2 which supplies or generates pulse width modulation signals 330_2 which are supplied for controlling the second converter 307.

The respective current controllers 327_1, 327_2 further receive as inputs the actual first current i_dq1 from the first system S1 as well as the respective second current i_dq2 from the system S2.

In the illustrated embodiment, the respective first harmonic current reference calculation module 324_1 as well as the respective second harmonic current reference calculation module 324_2 comprise or have access to respective look-up-tables, in particular a first look-up-table and a second look-up-table, from which the respective first and second harmonic reference currents 320_1, 320_2 are looked up, based on one or more of the input signals 318_1, 318_2 as look-up indices.

The respective look-up-tables may have been determined previously using or by performing simulations and/or performing test runs on real generator system or wind turbine. It is noted that the arrangement 315 utilizes distinct harmonic current reference calculation blocks, especially having different look-up-tables (LUTs) containing required amplitude and phase for the torque ripple control.

It should be understood that the dual system control scheme may be extended to any number of systems, such as three systems, four systems, five systems, or even a larger number of systems. Embodiments of the present invention provide a different torque ripple control strategy that accounts for the practical manufacturing and operation limits and deformations. Advantages may include more optimal ripple reduction and lower noise and vibration, which may in turn extend the turbine lifetime and enable a wide operation spectrum, i.e. less speed range avoiding.

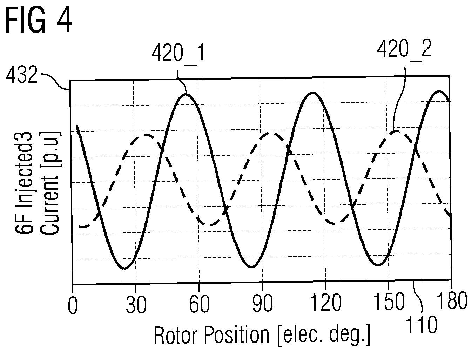

**Fig. 4** illustrates in a coordinate system having as abscissa 110 the rotor position and having as an ordinate 432 the amplitude of the injected current curves 420_1, 420_2 indicating the 6f injected current (corresponding to the harmonic current reference) for the first system S1 and the second system S2, respectively. It can be seen that the harmonic current references 420_1, 420_2 are different, in particular different in amplitude and in phase. Thereby, different designs or constructional details of the different stator-segments are accounted for, thereby improving the reduction of torque ripples.

According to other embodiments other harmonics can be counteracted by respective harmonic current injection, including e.g. 6f, 12f, 18f or other harmonics.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling a generator (116), in particular of a wind turbine (130), having a multi-stator-segment stator (101) comprising a first stator-segment (102a, S1) having a first multi phase winding set (104) and at least one second stator-segment (103a, S1) having at least one second multi phase winding set (105), the method comprising:

    receiving, in particular at a first harmonic current reference calculation module (324_1), first input signals (118_1) indicating an operation point of the first winding set (104);
    receiving, in particular at a second harmonic current reference calculation module (324_2), second input signals (118_2) indicating an operation point of the second winding set (105);
    determining, in particular in a dq-frame, a first harmonic reference current (120_1) of at least one harmonic based on the first input signals, in particular for reducing torque ripple of the first winding set;
    determining, in particular in a dq-frame, a second harmonic reference current (120_2) of at least one harmonic based on the second input signals, in particular for reducing torque ripple of the second winding set;
    wherein the first and second harmonic reference currents are in particular determined for reducing torque ripple of the complete generator;
    controlling the first winding set (104) based on the first harmonic reference current (120_1);
    controlling the second winding set (105) based on the second harmonic reference current (120_2).

2. Method according to the preceding claim,
    wherein the first stator-segment (102a) is different in geometry from the second stator-segment (103a) due to manufacturing deviations, and/or the difference is due to tolerance on rotor and/or magnet and/or airgap, and/or wherein the first harmonic reference current (420_1) and the second harmonic reference current (420_2) are different, in particular in amplitude and/or in phase.

3. Method according to any one of the preceding claims, wherein the first input signals (118_1) and the second input signals (118_2) are different or substantially equal.

4. Method according to any one of the preceding claims, wherein open-loop torque reduction is performed separately for the first winding set (104) and the second winding set (105) .

5. Method according to any one of the preceding claims,

    wherein the first winding set (104) is connected to a first converter (106),

wherein the second winding set (105) is connected to a second converter (107),
wherein the first winding set is controlled by controlling the first converter,
wherein the second winding set is controlled by controlling the second converter.

**6.** Method according to any one of the preceding claims, further comprising:

determining, in particular in a dq-frame, in particular by a first fundamental current reference calculation module (325_1), a first fundamental reference current (326_1) based on the first input signals; and/or
determining, in particular in a dq-frame, in particular by a second fundamental current reference calculation module (325_2), a second fundamental reference current (326_2) based on the second input signals;
controlling the first winding set further based on the first fundamental reference current; and/or
controlling the second winding set further based on the second fundamental reference current.

**7.** Method according to any one of the preceding claims,

wherein controlling the first winding set (304) based on the first harmonic reference current (320_1) and/or the first fundamental reference current (326_1) includes closed loop control using a first actual current (i_dq1) carried in the first winding set, in particular using a first current controller (327_1) receiving the first harmonic reference current and/or the first fundamental reference current and the first actual current;
wherein controlling the second winding set (305) based on the second harmonic reference current (320_2) and/or the second fundamental reference current (326_2) includes closed loop control using a second actual current (i_dq2) carried in the second winding set, in particular using a second current controller (327_2) receiving the second harmonic reference current and/or the second fundamental reference current and the second actual current.

**8.** Method according to any one of the preceding claims,

wherein the first current controller (327_1) outputs a first reference voltage (328_1), in particular in a dq-frame, wherein based on the first reference voltage a first converter (306) is controlled, in particular by first pulse width modulation signals, the first converter being electrically connected to the first winding set, and/or
wherein the second current controller outputs (327_2) a second reference voltage (328_2), in particular in a dq-frame,

wherein based on the second reference voltage a second converter (307) is controlled, in particular by second pulse width modulation signals, the second converter being electrically connected to the second winding set.

**9.** Method according to any one of the preceding claims, wherein the operation point of the respective winding set is, in particular in combination with a generator temperature, in particular average stator and/or rotor temperature, indicated by at least one or more of:

a d-component and a q-component of an actual current (i_dq) of the respective winding set;
an estimated torque and electrical speed ($\omega$) of the respective winding set (304, 305);
an active power and a reactive power of the respective winding set.

**10.** Method according to any one of the preceding claims,

wherein determining the first harmonic reference current (320_1) includes looking up at least one first look-up-table, in particular for amplitude and phase, based on the first input signals, and/or
wherein determining the second harmonic reference current (320_2) includes looking up at least one second look-up-table, in particular for amplitude and phase, based on the second input signals.

**11.** Method according to any one of the preceding claims, wherein the first and/or second look-up-table is determined by simulations taking into account geometries and/or tolerances and/or operation variations of the first stator-segment and second stator-segment and/or test runs on the generator involving measuring harmonic torque for different candidate values of reference currents in the look-up-tables, and/or
wherein the geometries and/or tolerances and/or operation variations of the first stator-segment and second stator-segment are determined analytically by equations.

**12.** Method according to any one of the preceding claims,

wherein the 6F and/or 12F harmonic is damped by the controlling; and/or
wherein the generator (116) has 6 or 12 stator-segments, each stator-segment being associated with and having wound thereon one winding set, wherein in particular exactly two winding set groups are provided, each group being connected in parallel and connected to a respective converter.

**13.** Arrangement (115, 315) for controlling a generator (316), in particular of a wind turbine, having a multi-segment stator (101) comprising a first stator-segment (102a) having a first multi phase winding set (104) and at least one second stator-segment (103a) having least one second multi phase winding set (105), the arrangement comprising:

a processor having an input port (117) adapted:

to receive, in particular at a first harmonic current reference calculation module, first input signals (118_1) indicating an operation point of the first winding set (104);
to receive, in particular at a second harmonic current reference calculation module, second input signals (118_2) indicating an operation point of the second winding set (105);

the processor being adapted:

to determine, in particular in a dq-frame, a first harmonic reference current (120_1) of at least one harmonic based on the first input signals, in particular for reducing torque ripple of the first winding set;
to determine, in particular in a dq-frame, a second harmonic reference current (120_2) of at least one harmonic based on the second input signals, in particular for reducing torque ripple of the second winding set,

wherein the first and second harmonic reference currents are in particular determined for reducing torque ripple of the complete generator
the processor having an output port adapted and being connected:

to control the first winding set (104) based on the first harmonic reference current (120_1);
to control the second winding set (105) based on the second harmonic reference current (120_2).

**14.** Generator system (100), in particular of a wind turbine, having:

a multi stator-segment stator (101) comprising a first stator-segment having a first multi phase winding set and at least one second stator-segment having least one second multi phase winding set;
an arrangement (115) according to the preceding claim;
in particular a permanent magnet rotor (108).

**15.** Wind turbine (130), including:

a generator system (300) according to the preceding claim;
a hub (321) having plural rotor blades (322) mounted, the hub being coupled with the rotor of the generator system.

FIG 1

100
105
104
103a
117
118_2
115
120_1
118_1
120_2
119

103b
102a
102b
101
S2
S1
104
106
103c
102c
107
109
102f
103f
108
105
102e
103e
116
102d
103d

FIG 2

111
113
112
6F Torque Ripple [p.u]
0
30
60
90
120
150
180
110
Rotor Position [elec. deg.]

FIG 3
317_1
318_1
324_1
315
θe
Torque
ωe
V*dq
Idq
Vdc
Harmonic Current Reference Calculation (including TRC LUT1)
i*dqh
s1
Fundamental Current Reference Calculation
i*dqf
325_1
317_2
318_2
324_2
Harmonic Current Reference Calculation (including TRC LUT2)
s2
325_2
320_1
326_1
319_1
319_2
320_2
326_2
327_1
327_2
Current Controller
323
328_1
328_2
dq/abc
V*abc
300
329_1
329_2
Modulator (PWM)
330_1
330_2
306
307
Frequency Converter
Speed Observer
idq1
idq2
iabc
350
316
322
321
304
305

FIG 4

420_1
420_2
432
6F Injected3
Current [p.u]
0
30
60
90
120
150
180
110
Rotor Position [elec. deg.]

Europäisches
Patentamt
European
Patent Office
Office européen
des brevets

# EUROPEAN SEARCH REPORT

Application Number
EP 24 17 4813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 2021/028731 A1 (FREIRE NUNO MIGUEL AMARAL [DK]) 28 January 2021 (2021-01-28)<br>* paragraphs [0013], [0058] *<br>* paragraph [0077] *<br>* figure 1 * | 1-10, 12-15<br>11 | INV.<br>H02P29/50<br>H02P25/22 |
| Y | US 2019/273457 A1 (DENG HENG [DK] ET AL) 5 September 2019 (2019-09-05)<br>* paragraphs [0086], [0091], [0092], [0095] * | 1-3,7, 12,13 | |
| Y | EP 2 672 624 A1 (SIEMENS AG [DE]) 11 December 2013 (2013-12-11)<br>* paragraphs [0052], [0053], [0070] *<br>* paragraphs [0007], [0041], [0043], [0047] *<br>* figures 1, 6 * | 4-6,14, 15 | |
| Y | EP 3 649 731 B1 (SIEMENS GAMESA RENEWABLE ENERGY AS [DK]) 9 June 2021 (2021-06-09)<br>* paragraphs [0022], [0035], [0071] - [0074] *<br>* figure 14 * | 8 | TECHNICAL FIELDS SEARCHED (IPC)<br>H02P |
| Y | JP 2007 104778 A (MITSUBISHI ELECTRIC CORP) 19 April 2007 (2007-04-19)<br>* paragraphs [0041], [0051] * | 9 | |
| Y | US 11 417 306 B2 (BOSE CORP [US]) 16 August 2022 (2022-08-16)<br>* SUMMARY *<br>* figure 3 * | 10 | |

The present search report has been drawn up for all claims

| Place of search | Date of completion of the search | Examiner |
|---|---|---|
| Munich | 11 September 2024 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 17 4813

This annex lists the patent family members relating to the patent documents cited in the above-mentioned European search report. The members are as contained in the European Patent Office EDP file on
The European Patent Office is in no way liable for these particulars which are merely given for the purpose of information.

11-09-2024

| Patent document cited in search report | Publication date | Patent family member(s) | Publication date |
|---|---|---|---|
| US 2021028731 A1 | 28-01-2021 | CN 111226389 A | 02-06-2020 |
| | | DK 3652853 T3 | 30-08-2021 |
| | | EP 3652853 A1 | 20-05-2020 |
| | | US 2021028731 A1 | 28-01-2021 |
| | | WO 2019037908 A1 | 28-02-2019 |
| US 2019273457 A1 | 05-09-2019 | DE 102016217887 A1 | 22-03-2018 |
| | | EP 3494635 A1 | 12-06-2019 |
| | | US 2019273457 A1 | 05-09-2019 |
| | | WO 2018050458 A1 | 22-03-2018 |
| EP 2672624 A1 | 11-12-2013 | DK 2672624 T3 | 01-12-2014 |
| | | EP 2672624 A1 | 11-12-2013 |
| | | US 2013320936 A1 | 05-12-2013 |
| EP 3649731 B1 | 09-06-2021 | DK 3649731 T3 | 26-07-2021 |
| | | EP 3649731 A1 | 13-05-2020 |
| | | WO 2019030138 A1 | 14-02-2019 |
| JP 2007104778 A | 19-04-2007 | JP 4191715 B2 | 03-12-2008 |
| | | JP 2007104778 A | 19-04-2007 |
| US 11417306 B2 | 16-08-2022 | CN 116711001 A | 05-09-2023 |
| | | EP 4272206 A1 | 08-11-2023 |
| | | JP 2024501335 A | 11-01-2024 |
| | | US 2022208164 A1 | 30-06-2022 |
| | | WO 2022147433 A1 | 07-07-2022 |

EPO FORM P0459

For more details about this annex : see Official Journal of the European Patent Office, No. 12/82